(19) Europäisches Patentamt
European Patent Office
Office européen des brevets

(11) **EP 2 583 380 B1**

(12) **EUROPÄISCHE PATENTSCHRIFT**

(45) Veröffentlichungstag und Bekanntmachung des Hinweises auf die Patenterteilung:
**06.08.2014 Patentblatt 2014/32**

(51) Int Cl.:
*H02P 6/20* (2006.01)    *H02P 1/40* (2006.01)

(21) Anmeldenummer: **11722104.4**

(86) Internationale Anmeldenummer:
**PCT/EP2011/058967**

(22) Anmeldetag: **31.05.2011**

(87) Internationale Veröffentlichungsnummer:
**WO 2011/157553 (22.12.2011 Gazette 2011/51)**

(54) **VERFAHREN UND VORRICHTUNG ZUM ANLASSEN EINES ELEKTROMOTORS**

METHOD AND DEVICE FOR STARTING AN ELECTRIC MOTOR

PROCÉDÉ ET DISPOSITIF POUR DÉMARRER UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2010 DE 102010030239**

(43) Veröffentlichungstag der Anmeldung:
**24.04.2013 Patentblatt 2013/17**

(73) Patentinhaber: **BSH Bosch und Siemens Hausgeräte GmbH**
**81739 München (DE)**

(72) Erfinder:
• **ABEL, Falko**
**93089 Aufhausen (DE)**
• **WEIDNER, Eberhard**
**90478 Nürnberg (DE)**

(56) Entgegenhaltungen:
DE-A1- 10 215 428     US-A- 4 565 957
US-A1- 2007 001 635

**Beschreibung**

Die vorliegende Erfindung betrifft ein Verfahren sowie eine Vorrichtung zum Anlassen eines Elektromotors.

Bürstenlose Gleichstrommotoren, auch als BLDC-Motoren (aus dem Englischen: "brush-less direct current motor") bezeichnet, werden beispielsweise als Kompressorantrieb in Kühlschränken verwendet. Solche Elektromotoren weisen Wicklungsstränge und einen Rotor auf, der einen Permanentmagneten umfasst. Werden die Wicklungsstränge von Strom durchflossen, so erzeugen sie ein Magnetfeld welches auf den Permanentmagneten ein Drehmoment ausübt und somit den Rotor in Bewegung versetzt. Durch abwechselndes Ansteuern der verschiedenen Wicklungsstränge im Motor wird ein drehendes Magnetfeld erzeugt, welches somit den Rotor antreibt.

Manche Antriebe, wie z.B. Kompressorantriebe in Kühlschränken haben ein ungleichmäßiges Lastprofil, was bedeutet, dass die von ihnen angetriebene Last über eine vollständige Umdrehung des Motors variiert, wobei das maximale vom Motor aufzubringende Drehmoment ein Vielfaches des durchschnittlichen Drehmoments betragen kann. Beim Anlassen des Motors ist es daher vorteilhaft, den Rotor zunächst in eine klar definierte Position zu bringen, damit der Rotor bereits einen möglichst großen Drehwinkel zurückgelegt hat und auf ein möglichst großes Drehmoment beschleunigt wurde, bevor das maximale Drehmoment auftritt.

Eine Möglichkeit, den Rotor zu positionieren ist es, die Wicklungsstränge des Motors durch Ansteuerung mit einer bestimmten Schalterstellung mit einem definierten, konstanten Strom zu beaufschlagen, also durch Einstellen einer bestimmten elektrischen Position. Der definierte Strom führt zu einem bestimmten Magnetfeld, an welchem sich der Rotor mit seinem Permanentmagneten ausrichtet. Allerdings ist hierbei problematisch, dass mit dieser Vorgehensweise die genaue mechanische Position bei Motoren mit mehr als einem Polpaar nicht bekannt ist. So entsprechen einer bestimmten elektrischen Position bei einem 6-poligen Motor, wie er häufig für Kühlschrankkompressoren eingesetzt wird, drei verschiedene mechanische Position, die jeweils um einen Drehwinkel von 120° gegeneinander versetzt sind. Abhängig von der Ausgangsposition nimmt der Rotor dabei die dieser Ausgangsposition nächstliegende mechanische Position ein. Dies führt jedoch dazu, dass der Motor nur bei einer der drei möglichen mechanischen Positionen von der optimalen Ausgangsposition gestartet wird, wohingegen bei den beiden anderen mechanischen Positionen der Drehwinkel bis zur maximalen Last kleiner ist. In diesem letzteren Falle kann es vorkommen, dass der Motor bei Erreichen der maximalen Last noch nicht das erforderliche Drehmoment aufbringt, um diese zu überwinden, und daher hängenbleibt und das Anlassen fehlschlägt. Eventuell sind dann mehrere Anlassversuche notwendig, um den Motor zu starten.

Zwar ist es möglich, zusätzliche Sensoren vorzusehen, die eine Information über die genaue Stellung des Rotors liefern, allerdings ist eine solche Lösung mit zusätzlichen Kosten für solche Sensoren verbunden.

Die Druckschrift DE 698 03 885 T2 offenbart eine Steuerungsvorrichtung für elektrische Motoren, bei der eine Steuereinheit den Schalteinrichtungen eine Schaltfrequenz und eine Schaltdauer vorgibt, die so festgelegt sind, dass der Spannungswert, der tatsächlich an die Wicklungen angelegt ist, derjenige ist, der unabhängig vom Schaltzustand der Schalteinrichtungen der Drehzahl und dem Drehmoment entspricht, die vom Elektromotor gefordert werden.

Die Druckschrift DE 40 09 258 C2 offenbart ein Verfahren und eine elektronische Regelschaltung zum Anlassen eines bürstenlosen Gleichstrommotors.

Die Druckschrift DE 600 25 909 T2 offenbart ein Startsystem für einen elektrischen Motor, der im Inneren des Gehäuses eines hermetischen Kühlverdichters angebracht sein kann.

Die Druckschrift DE 102 15 428 A1 offenbart ein Verfahren zur Bestimmung der Rotorlage eines Synchronmotors. Dabei wird zunächst der "Rotor des Synchronmotors mittels einer Bremse" blockiert oder durch hohe Haftreibung gehalten. Dann wird bei eingelegter Bremse eine Vielzahl von Stromvektoren mit unterschiedlicher Winkellage an den Synchronmotor angelegt. Die Auslenkung des Rotors ist auf die Elastizität der Welle zurück zu führen, an der der Rotor und die Bremse angreifen bzw. kann die Haltekraft der Bremse für sehr kleine Auslenkungen als Federkraft angesehen werden.

Die Druckschrift US 4,565,957 offenbart ein Verfahren und ein System zum Starten eines kommutierten SCR-Inverters. Dabei wird der Rotor durch Erzeugen von Magnetfeldern in eine erste Position gedreht, dann in eine zweite Position gedreht, wobei der Rotor jeweils in jede dieser Positionen komplett angehalten wird. Der Motor kann gemäß der US 4,565,957 einen Kompressor mit großer Kapazität für ein industrielles Klimatisierungssystem antreiben.

Es ist somit eine Aufgabe der vorliegenden Erfindung, ein Verfahren und eine Vorrichtung zum Anlassen eines Elektromotors mit Wicklungssträngen und einem Rotor bereitzustellen, mit welchen ein sicheres Anlassen des Elektromotors auch ohne Kenntnis der Anfangsstellung des Rotors ermöglicht wird.

Gemäß einer Ausgestaltung umfasst ein Verfahren zum Anlassen eines Elektromotors, insbesondere eines bürstenlosen Gleichstrommotors, welcher Wicklungsstränge und einen Rotor aufweist, die folgenden Schritte:

- Antreiben des Rotors mit einem ersten Drehmoment in einer ersten Drehrichtung, wobei ein Maximalwert des ersten Drehmoments nicht größer als ein der Drehung des Rotors entgegenwirkendes, maximales Gegendrehmoment ist, so dass der Rotor in einer ersten Stillstandsposition zum Stillstand kommt;
- ausgehend von der ersten Stillstandsposition, Antreiben des Rotors in einer der ersten Drehrichtung entgegen gesetzten zweiten Drehrichtung, bis der Rotor in einer vorbestimmten zweiten Stillstandsposition zum Stillstand kommt; und

- ausgehend von der zweiten Stillstandsposition, Anlassen des Rotors in der ersten Drehrichtung

Mit diesem Verfahren kann der Rotor auch bei unbekannter Anfangsposition zuerst in eine definierte Position verfahren werden, um von dort mit einem optimalen Anlaufprofil hochzufahren.

Der Elektromotor kann insbesondere ein bürstenloser Gleichstrommotor sein, der Wicklungsstränge aufweist, wobei der Rotor angetrieben wird, indem die Wicklungsstränge mit Erregerströmen beaufschlagt werden.

Der Rotor kann mit einem pulsweitenmoduliertes Signal, insbesondere mit einem pulsweitenmodulierten Stromsignal angetrieben werden. Dabei kann der Dutycycle und/oder der Takt des pulsweitenmodulierten Signals derart ausgewählt sein, dass das der Maximalwert des ersten Drehmoments nicht größer ist als das maximale Gegendrehmoment.

Vor Erreichen der ersten und/oder der zweiten Stillstandsposition kann der Elektromotor im Schrittbetrieb betrieben werden. Somit kann der Elektromotor kontrolliert in die erste und/oder die zweite Stillstandsposition verfahren werden.

Die zweite Stillstandsposition kann in einem Winkelbereich von 0° bis 90°, vorzugsweise 30° bis 60°, weiter vorzugsweise 35° bis 45° hinter der dem maximalen Gegendrehmoment entsprechenden Position liegen. Somit kann ein langer Anlaufwinkel bis zum Auftreten des maximalen Gegendrehmoments gewährleistet werden.

Beim Anlassen des Motors kann ausgehend von der zweiten Stillstandsposition ein steigendes zweites Drehmoment erzeugt werden. Somit kann das Drehmoment sukzessive auf ein ausreichend hohes Drehmoment angehoben werden, um das maximale Gegendrehmoment zu überwinden. Dabei kann das zweite Drehmoment schrittweise linear ansteigen. Alternativ dazu ist es jedoch auch möglich, dass die Steigung des zweiten Drehmoments mit der Zeit zunimmt. Somit kann der Verlauf des erzeugten Drehmoments dem Verlauf des Lastprofils bzw. des Gegendrehmoments angepasst werden.

Das Drehmoment kann einer Startrampe folgen, an dessen Ende in den Auto-Kommutierungsbetrieb geschaltet wird, wobei zum Ende der Startrampe das Gegendrehmoment weniger als die Hälfte, vorzugsweise weniger als ein Drittel des maximalen Gegendrehmoments betragen kann. Somit kann frühzeitig vor dem maximalen Gegendrehmoment in den Auto-Kommutierungsbetrieb geschaltet werden.

Der Elektromotor kann zunächst im Strommodus betrieben werden, und bei Erreichen einer bestimmten Drehzahl in den Spannungsmodus umgeschaltet werden. Wird der Motor während der Anlassphase im Strommodus betrieben, dann kann eine ideale Einstellung des Drehmoments während der Startphase gewährleistet werden. Nach dem Hochlaufen, also zum Beispiel bei Erreichen einer bestimmten Drehzahl kann der Motor dann in den Spannungsmodus umgeschaltet werden, um die Eigenschaft des Synchronmotors zu nutzen, über den Lastwinkel die Drehmomentschwankungen im Betrieb auszusteuern.

Vor dem Antreiben des Rotors mit dem ersten Drehmoment kann der Rotor für eine bestimmte Zeitdauer in einer Ruheposition gehalten werden. Eine solche Zeitsperre ermöglicht es, eine Normalisierung der Druckverhältnisse in einem Kompressor abzuwarten.

Der Elektromotor kann beispielsweise als Antrieb für einen Kompressor, insbesondere in einem Kältegerät, verwendet werden, wobei das maximale Gegendrehmoment dem Gegendrehmoment im Kompressionspunkt entspricht. Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Es ist möglich, dass der Elektromotor durch das Anlegen von Steuersignalen angetrieben wird, wobei in einem ersten Anlaufversuch die Steuersignale anhand von Parametern für einen Zustand mit einem ersten maximalen Gegendrehmoment bestimmt werden, und in einem auf den ersten Anlaufversuch folgenden zweiten Anlaufversuch die Steuersignale anhand von Parametern für einen Zustand mit einem zweiten maximalen Gegendrehmoment bestimmt werden, wobei das zweite maximale Gegendrehmoment größer als das erste maximale Drehmoment ist. Im ersten Anlaufversuch können also Parameter für einen drucklosen Betrieb und im zweiten Anlaufversuch Parameter für einen Anlauf gegen Druck verwendet werden.

Ein Verfahren zum Anlassen eines Elektromotors mit einem Rotor weist die folgenden Schritte auf:

- Erzeugen eines Drehmoments, das den Rotor in einer ersten Drehrichtung bewegt, um den Elektromotor anzulassen;
- falls das Anlassen des Elektromotors nicht erfolgreich war, Ausführen des oben beschriebenen Verfahrens.

Somit kann ein adaptives Anlassverfahren verwirklicht werden.

Ferner wird eine Vorrichtung zum Anlassen eines Elektromotors bereitgestellt, welche eingerichtet ist, eines der oben beschriebenen Verfahren durchzuführen.

Weitere Merkmale und Vorteile der Erfindung ergeben sich aus der nachfolgenden Beschreibung von Ausführungsbeispielen unter Bezugnahme auf die beigefügten Figuren. Dabei zeigen

Fig. 1    ein Ersatzschaltbild eines Elektromotors, welcher als bürstenloser Gleichstrommotor bzw. BLDC-Motor ausgebildet ist,

Fig. 2    einen Graphen, welcher schematisch den Signalverlauf von Motorstrom und Gegen-EMK sowie die Schaltzustände der Schalter darstellt,

Fig. 3    ein Diagramm, welches den Betrieb im Strommodus und den Betrieb im Spannungsmodus illustriert, wobei der Strommodus in der linken Hälfte und der Spannungsmodus in der rechten Hälfte des Diagramms dargestellt ist,

Fig. 4    verschiedene Kompressorlastprofile eines Elektromotors, und

Fig. 5    die drei Schritte bzw. Phasen eines erfindungsgemäßen Verfahrens.

Falls nichts anderes angegeben ist, bezeichnen gleiche Bezugszeichen in den Figuren gleiche oder funktionsgleiche Elemente.

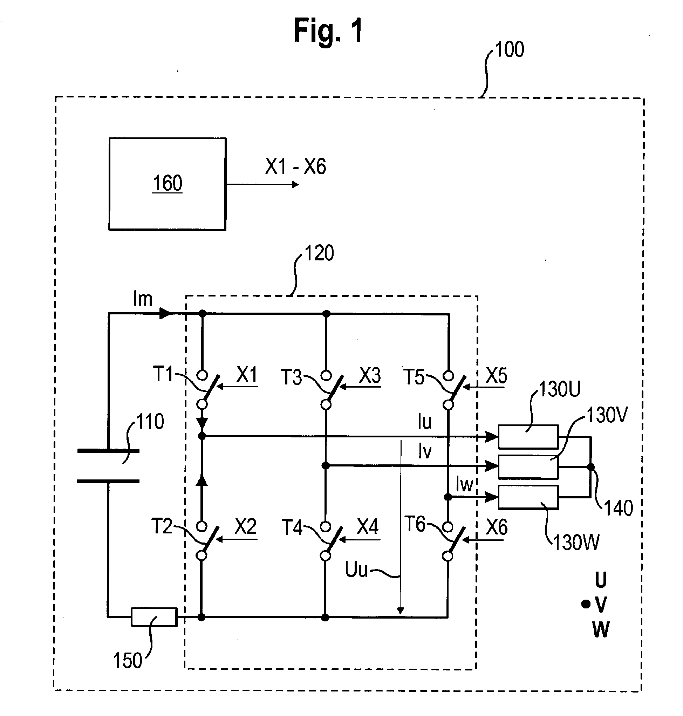

Fig. 1 zeigt ein Ersatzschaltbild eines Elektromotors 100, welcher als bürstenloser Gleichstrommotoren bzw. BLDC-Motor ausgebildet ist und beispielsweise als Kompressorantrieb in einem Kühlschrank verwendet werden kann. Der Elektromotor 100 weist eine Spannungsversorgung 110, eine Wechselrichterbrücke 120, drei Motorwicklungen bzw. Wicklungsstränge 130U, 130V, 130W und eine Motorsteuerung 160 auf.

Die Spannungsversorgung 110 stellt eine Zwischenkreisspannung zwischen einem Zwischenkreisversorgungspotential und einer Zwischenkreismasse bereit. Die Wechselrichterbrücke 120 weist sechs Schalter T1 bis T6 auf, welche in Form einer B6-Brücke angeordnet sind und die Wicklungsstränge 130U, 130V und 130W mit Strom versorgen. Genauer sind jeweils zwei Schalter T1 und T2, T3 und T4 bzw. T5 und T6 in Reihe zwischen dem Zwischenkreisversorgungspotential und der Zwischenkreismasse angeschlossen. Die Knoten zwischen den Schaltern T1 und T2, T3 und T4 bzw. T5 und T6 sind jeweils mit einer Seite der Wicklungsstränge 130U, 130V und 130W verbunden. An ihrer anderen Seite sind die Wicklungsstränge 130U, 130V und 130W mit einem Sternpunkt 140 verbunden. Ferner ist zwischen der Wechselrichterbrücke 120 und der Spannungsversorgung 110 auf Seiten der Zwischenkreismasse ein Widerstand 150 vorgesehen.

Die Schalter T1 bis T6 können beispielsweise jeweils einen Leistungstransistor und eine dazu parallel geschaltete Freilaufdiode umfassen. Die Schalter T1 bis T6 werden mittels Steuersignalen X1 bis X6 angesteuert, die von einer Motorsteuerung 160 bereitgestellt werden. Die Motorsteuerung 160 entspricht dabei einer Vorrichtung zum Anlassen eines Elektromotors. Dabei werden die Wicklungsstränge 130 derart angesteuert, dass ein rotierendes Magnetfeld erzeugt wird, in welchem ein einen Permanentmagneten umfassender Rotor rotiert. Der Elektromotor 100 ist also ein dreisträngiger Permamentmagnet-Synchronmotor, der mittels der B6-Wechselrichterbrücke 120 mit einer dreiphasigen Spannung gespeist wird.

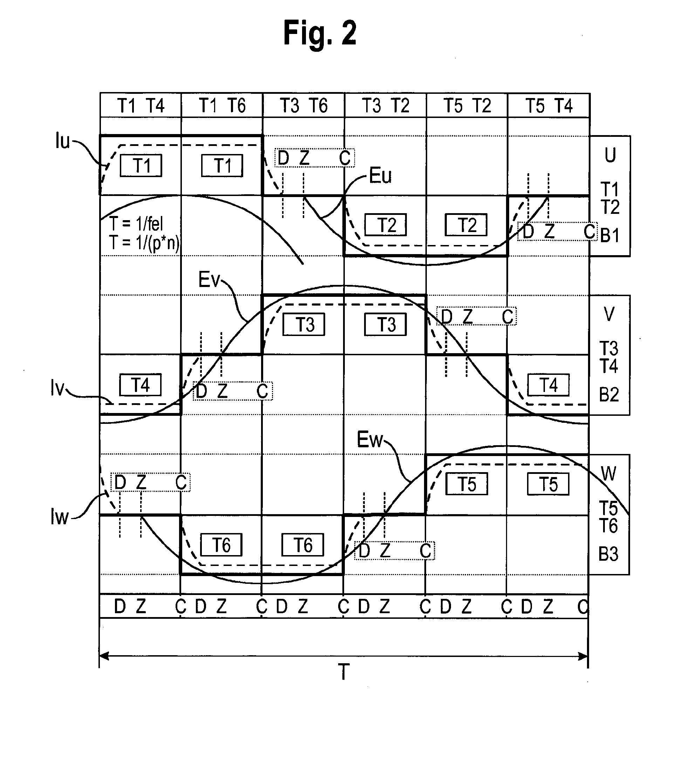

Fig. 2 ist ein Diagramm, welches schematisch den Signalverlauf von Motorstrom und Gegen-EMK sowie die Schaltzustände der Schalter T1 bis T6 darstellt. Dabei stellen die fette durchgezogenen Linien die Schaltzustände der Schalter T1 bis T6 dar, die gestrichelten Linie stellen die Wicklungsströme bzw. Erregerströme Iu, Iv und Iw durch die Wicklungsstränge 130U, 130V und 130W dar, und die dünnen durchgezogenen Linie stellen die Gegen-EMKs Eu, Ev, Ew dar, die in den Wicklungsstränge 130U, 130V und 130W erzeugt werden. Das Diagramm in Fig. 2 zeigt dabei den Verlauf während einer elektrischen Periode T, welche ihrerseits in sechs Teilperioden der Zeitdauer T/6 unterteilt ist, die jeweils einem 60°-Abschnitt entsprechen. Die drei Wicklungsstränge 130U, 130V und 130W werden jeweils mit einem Versatz von 120° angesteuert. Während der ersten Teilperiode sind die Schalter T1 und T4 eingeschaltet bzw. leitend geschaltet und alle übrigen Schalter ausgeschaltet bzw. nicht leitend geschaltet, so dass der Motorstrom Im durch den Wicklungsstrang 130U durch den Sternpunkt 140 über den Wicklungsstrang 130V zur Zwischenkreismasse fließt. Am Ende dieser ersten Teilperiode erfolgt eine Kommutierung vom Wicklungsstrang 130V auf den Wicklungsstrang 130W, indem der Schalter T4 ausgeschaltet und der Schalter T6 eingeschaltet wird. Während dieser zweiten Teilperiode sind die Schalter T1 und T6 eingeschaltet, so dass der Motorstrom Im durch den Wicklungsstrang 130U durch den Sternpunkt 140 über den Wicklungsstrang 130W zur Zwischenkreismasse fließt. Am Ende dieser zweiten Teilperiode erfolgt eine zweite Kommutierung vom Wicklungsstrang 130U auf den Wicklungsstrang 130V, indem der Schalter T1 ausgeschaltet und der Schalter T3 eingeschaltet wird. Während dieser dritten Teilperiode sind die Schalter T3 und T6 eingeschaltet, so dass der Motorstrom Im durch den Wicklungsstrang 130V durch den Sternpunkt 140 über den Wicklungsstrang 130W zur Zwischenkreismasse fließt. Entsprechend diesem Muster sind also stets zwei der Wicklungsstränge 130 stromführend und der dritte Wicklungsstrang 130 stromlos. Dabei wird jeder einzelne Wicklungsstrang 130 reihum für 2 x 60° = 120° an das Zwischenkreisversorgungspotential geschaltet, dann für 60° stromlos geschaltet, dann für 2 x 60° = 120° an die Zwischenkreismasse geschaltet und dann wieder für 60° stromlos geschaltet.

Pro elektrischer Periode T werden also sechs Schaltzustände angesteuert, wobei sich die elektrischer Periode T ergibt aus

$$T = 1 / (p \times n) \qquad\qquad (1)$$

wobei n der Drehzahl und p der Polpaarzahl des Motors entspricht.

Die Motorsteuerung 160 stellt die Zeitpunkte der Kommutierungen so ein, dass die Bewegung des Rotors und die Phasenzeiten der angelegten Spannungen synchron und in Phase sind. Dabei wird aus der Gegen-EMK des Motors, also den vom Magnetfeld des Rotors in den Wicklungssträngen 130 des Stators induzierten Spannungen auf die Lage des Rotors geschlossen. Eine kennzeichnende Größe ist hierfür der Nulldurchgang der Gegen-EMK, welcher in Fig. 2 jeweils mit "Z" gekennzeichnet ist. Die Kommutierung kann beispielsweise um eine vorgegebene Zeitdauer verzögert nach dem erkannten Nulldurchgang veranlasst werden, wobei diese Zeitdauer drehzahl- und/oder lastabhängig sein kann. In Fig. 2 sind die Zeitpunkte der Kommutierung jeweils mit "C" gekennzeichnet. Ferner ist in Fig. 2 erkennbar, dass der Wicklungsstrom eine durch die Induktivität der Wicklungsspule bedingte Trägheit aufweist. So steigt der Strom Iu durch den Wicklungsstrang 130U bei Einschalten des Schalters T1 über eine bestimmte Anstiegszeitdauer an, und bei Einschalten des Schalters T1 fällt der Strom Iu ab auf Null über eine Zeitdauer, die der Demagnetisierungszeitdauer des Wicklungsstrangs 130U entspricht. Erst zum Zeitpunkt "D" ist der Wicklungsstrom auf Null abgeklungen. Die Kommutierung ist also durch die drei Ereignisse D, Z und C gekennzeichnet, also Zeitpunkt D der Demagnetisierung des zuvor Strom führenden Stranges, Zeitpunkt Z der Nulldurchgangserkennung und Zeitpunkt C der aktiv ausgelösten Kommutierung nach einer vorbestimmten Zeit.

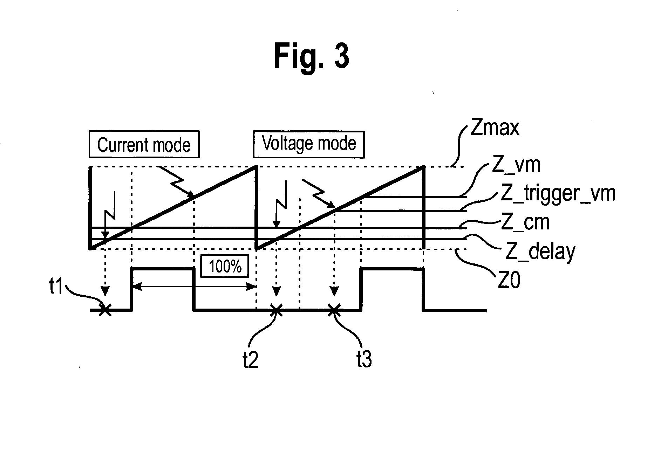

Die Regelung der Energiezufuhr zu den Motorwicklungen erfolgt über eine Pulsweitenmodulation, PWM. Hierbei wird der "Dutycycle" als Maß für die relative Einschaltdauer der PWM-modulierten Klemmenspannung verwendet. Der Dutycycle ist das Verhältnis zwischen Einschaltdauer und Taktzeit und hat somit einen Wert zwischen 0% und 100%. Die PWM zur Ansteuerung des Elektromotors 100 kann im Strommodus oder im Strommodus oder im Spannungsmodus geschehen. Fig. 3 zeigt ein Diagramm, welches beide Verfahren illustriert, wobei der Strommodus in der linken Hälfte und der Spannungsmodus in der rechten Hälfte des Diagramms dargestellt ist.

Beiden Verfahren gemein ist, dass beispielsweise in der Motorsteuerung 160 ein nicht näher dargestellter Zähler Referenzwerte bzw. Zählwerte erzeugt, die von einem Ausgangswert Z0 bis zu einem Maximalwert Zmax inkrementiert werden, so dass sich über die Zeit betrachtet ein Dreiecksmuster bzw. dreiecksförmiger Verlauf ergibt.

Im Strommodus wird der Motorstrom mittels einer Komparatorschaltung im Zweipunktverfahren eingestellt. Erreicht der Zählwert des Zählers den Vergleichswert Z_cm, dann erfolgt das Einschalten der pulsweitenmodulierten Spannung. Im Strommodus ergibt sich der Dutycycle durch den Zeitpunkt der Abschaltung des PWM-Pulses durch die Ansteuerschaltung. Genauer gesagt können beispielsweise einem Stromkomparator der SollStrom und der momentane Ist-Strom zugeführt werden. Erreicht der Ist-Strom den SollStrom, dann erfolgt das Ausschalten der pulsweitenmodulierten Spannung.

Im Spannungsmodus wird dagegen von der Motorsteuerung 160 eine Sollspannung berechnet und die relative Einschaltdauer der PWM wird eingeprägt. Dies kann beispielsweise dadurch geschehen, dass die Motorsteuerung 160 einen Vergleichswert Z_vm bestimmt und mit dem aktuellen Zählwert vergleicht, wobei ein Einschalten der PWM-Spannung erfolgt, wenn der Zählwert Z größer oder gleich Z_vm und kleiner oder gleich Zmax ist. Die Zählwerte Z_delay und Z_trigger_vm zeigen mögliche Zeitpunkte t1, t2 und t3 für eine Messung der Gegen-EMK an.

Mit anderen Worten wird im Strommodus das Drehmoment eingeprägt und im Spannungsmodus die Drehzahl. Die Wahl des Betriebsmodus erfolgt in Abhängigkeit vom Lastverhalten und den Anforderungen an den Elektromotor 100. Je nachdem, ob hohe Drehzahlkonstanz, geringer Geräuschentwicklung, Schwingungen oder Energieeffizienz erwünscht sind, wird die entsprechende Betriebsart gewählt. Dabei kann die Betriebsart bei Einschalten des Elektromotors 100 festgelegt werden, oder auch in Abhängigkeit von den Betriebsbedingungen umgeschaltet werden. Auch eine Mischung der Betriebsarten ist möglich. Es ist vorteilhaft, den Motor während der Anlassphase im Strommodus zu betreiben, um eine ideale Einstellung des Drehmoments während der Startphase zu gewährleisten. Nach dem Hochlaufen, also zum Beispiel bei Erreichen einer bestimmten Drehzahl kann der Motor dann in den Spannungsmodus umgeschaltet werden, um die Eigenschaft des Synchronmotors zu nutzen, über den Lastwinkel die Drehmomentschwankungen im Betrieb auszusteuern.

Der Elektromotor 100 kann beispielsweise als Antrieb eines Kompressors in einem Kühlschrank eingesetzt werden. Ein solcher Kompressor verdichtet ein Kühlmedium mittels eines Kolbenverdichters. Dabei wird das Kühlmedium wird durch ein Einlassventil in einer Ventilplatte in einen Kolbenraum eingelassen, durch einen von Elektromotor angetriebenen Kolben verdichtet und durch ein Auslassventil in der Ventilplatte aus dem Kolbenraum ausgetrieben. Einmal pro Umdrehung erreicht der Kolben somit dem oberen Totpunkt und somit den Punkt der maximalen Kompression, in welchem das größte Gegendrehmoment gegen den Motor wirkt. Das Lastprofil der vom Motor angetriebenen Last ist somit sehr dynamisch, wobei das maximale Drehmoment um ein Vielfaches, z.B. ein Fünffaches über dem mittleren Drehmoment liegt.

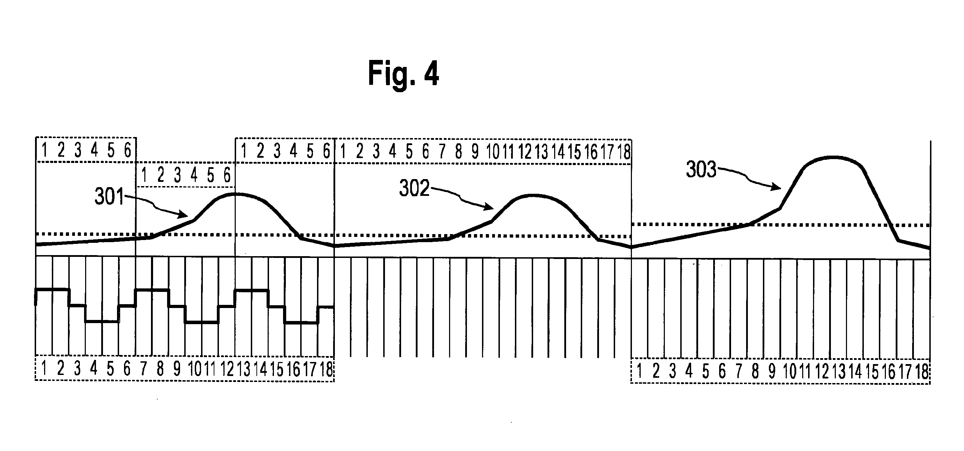

Fig. 4 zeigt verschiedene Kompressorlastprofile 301, 302 und 303 eines solchen Elektromotors 100. Wie in Fig. 4 erkennbar, entspricht eine Umdrehung des 6-poligen Elektromotors 100 drei elektrischen Perioden T, also einer elektrischen Periode T pro Polpaar. Jede dieser elektrischen Perioden T entspricht 6 elektrischen Positionen oder Schalterstellungen, wie für das Lastprofil 301 angedeutet ist. Es ergeben sich somit insgesamt 18 elektrischen Teilperioden, wie für das Lastprofil 302 angedeutet ist. In der unteren Hälfte der Fig. 4 ist schematisch das charakteristische BLDC-Steuersignal für einen Wicklungsstrang angedeutet. Der durch das Kühlmedium verursachte Gegendruck ist vom Betriebszustand des Kühlkreises abhängig. Je nachdem, wie viel vom Kühlmedium verflüssigt ist und wie viel noch gasförmig ist, ist das maximale Gegendrehmoment höher oder geringer. Wird der Kompressor nach einer längeren Standzeit wieder in Betrieb genommen, dann ist der Druck im Kolbenraum geringer, so dass das maximale Gegendrehmoment geringer ist. Dies entspricht den Lastprofilen 301 und 302. Läuft der Kompressor dagegen nach kurzer Lastzeit an, dann geschieht dies gegen einen höheren Restdruck. Dies entspricht dem Lastprofil 303.

Wie eingangs erläutert, kann der Rotor des BLDC-Motors 100 durch eine definierte Schalterstellung positioniert werden. Da der BLDC-Motor 100 aber drei Polpaare aufweist, sind jeder der sechs möglichen elektrischen Positionen 1 bis 6 genau drei Rotorstellungen zugeordnet. In welcher dieser drei Rotorstellungen der Rotor positioniert wird, hängt davon ab, in welcher Stellung der Rotor nach der vorhergehenden Rotation zum Stehen kam. Diese Stellung ist nicht bekannt. Wird der Rotor nun zunächst in einer Position positioniert, die nicht ausreichend weit von der maximalen Last entfernt ist, z.B. in Position 2 der zweiten elektrischen Periode im Lastprofil 301, dann ist das durch die Anlauframpe erzeugte Drehmoment möglicherweise nicht groß genug, um das auf den Motor wirkende Gegendrehmoment zu überwinden, und der Anlauf schlägt fehl.

Durch das im Folgenden beschriebene Verfahren wird der Rotor zunächst in eine genau definierte Position verfahren, bevor der Anlauf in Drehrichtung erfolgt. Mit anderen Worten wird also zunächst die Mehrdeutigkeit der Rotorpositionen aufgelöst. Dem Verfahren liegt die Idee zugrunde, den Rotor zunächst mit einem geringen Drehmoment in einer ersten Drehrichtung zu drehen, so dass er in einer ersten Stillstandsposition vor dem maximalen Gegendrehmoment hängen bleibt. Anschließend wird der Rotor um einen bestimmten Drehwinkel in entgegengesetzter Richtung bis zu einer zweiten Stillstandsposition gedreht und positioniert. Schließlich wird der Motor mit einer Anlauframpe in der ersten Drehrichtung hochgefahren. Die einzelnen Schritte werden im Folgenden näher erläutert.

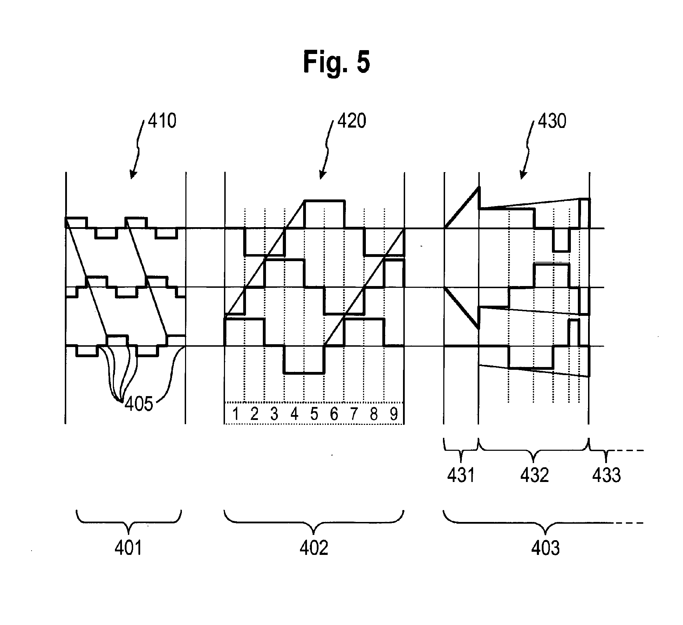

Fig. 5 illustriert die drei Schritte bzw. Phasen 401, 402 und 403 dieses Verfahrens und zeigt schematisch die Erregerströme 410, 420 und 430, die in den einzelnen Phasen durch die Wicklungsstränge 130 fließen. In einem ersten Schritt 401 wird der Rotor in eine erste Richtung angetrieben, welche mit der späteren, endgültigen Drehrichtung des Rotors identisch ist. Dabei werden die Wicklungsstränge mit einem Erregerstrom beaufschlagt, der ein erstes Drehmoment erzeugt, das kleiner ist als ein der Drehung des Rotors entgegenwirkendes, maximales Gegendrehmoment. Unter dem maximalen Gegendrehmoment ist dabei das Drehmoment zum Zeitpunkt der größten Last während einer vollständigen Umdrehung des Motors, also im Kompressionspunkt, zu verstehen. Die Drehung des Rotors kann in dieser Phase im Schrittbetrieb erfolgen. Das bedeutet, dass der Rotor sich mit jeder Kommutierung in Drehrichtung bewegt und dann, nachdem sich der Permanentmagnet des Rotors am geänderten Magnetfeld ausgerichtet hat, zum Stehen kommt, bevor erneut kommutiert wird. Jede Kommutierung entspricht dabei einem Schritt bzw. einer elektrischen Teilperiode. Die einzelnen Schritte 405 werden auch als "Haftschritte" bezeichnet. Zum Erzeugen des Magnetfelds werden jeweils zwei der drei Wicklungsstränge 130U, 130V und 130W mit Strom durchflossen. Die Ansteuerung erfolgt dabei über eine Pulsweitenmodulation (PWM), wobei die Schalter T1 bis T6 jeweils für eine dem Dutycycle entsprechende Zeit pro PWM-Takt eingeschaltet werden. Das erzeugte erste Drehmoment ist dabei nicht notwendigerweise konstant über die Zeit. Insbesondere im Schrittbetrieb kann das Drehmoment einem bestimmten Profil folgen. Wichtig ist lediglich, dass der Maximalwert des ersten Drehmoments unter dem maximalen Gegendrehmoment liegt.

Dass das in jedem Schritt 405 dieser ersten Phase 401 erzeugte Drehmoment kleiner ist als das maximale Gegendrehmoment kann durch entsprechendes Einstellen des Dutycycles der PWM-Modulation und der Dauer der einzelnen Schritte 405 erreicht werden. Ansteuerparameter, die dem maximalen Gegendrehmoment im Leerlauf, also bei minimalem Druck im Kolbenraum, entsprechen, können in einem Speicher der Motorsteuerung 160 abgespeichert sein und in dieser ersten Phase 401 herangezogen werden, wodurch ein ausreichend niedriges Drehmoment gewährleistet werden kann. Da der Rotor das maximale Gegendrehmoment nicht überwinden kann, bleibt er in einer ersten Stillstandsposition vor dem Kompressionspunkt hängen. Diese erste Stillstandsposition liegt dabei wenige Schritte, z.B. zwei bis vier Schritte, vor dem Kompressionspunkt. Es ist somit ausreichend, wenn die Schrittzahl in dieser Phase 401 der Anzahl der elektrischen Teilschritte pro Umdrehung entspricht, da der Rotor dann unabhängig von der Anfangsposition in derselben Position hängen bleibt. Es ist jedoch selbstverständlich unschädlich, eine größere Anzahl von Haftschritten 405 durchzuführen. Ferner ist es auch ausreichend, eine geringere Anzahl von Haftschritten 405 vorzunehmen. Unter der Annahme, dass der sich in seiner Anfangsposition mindestens zwei Schritte hinter dem Kompressionspunkt befindet und mindestens zwei Schritte vor dem Kompressionspunkt zum Stehen kommt bzw. hängen bleibt, ist es im vorliegenden Beispiel ausreichend, 14 Haftschritte 405 vorzunehmen.

In der nächsten Phase 402 des Verfahrens wird der Rotor, ausgehend von der ersten Stillstandsposition, um eine bestimmte Anzahl von Schritten in einer der ersten Drehrichtung entgegen gesetzten zweiten Drehrichtung bewegt. Ziel dieser Phase 402 ist es, den Rotor in eine definierte Stillstandsposition zu bringen, die in Drehrichtung möglichst weit entfernt vom Kompressionspunkt ist, damit in der darauffolgenden Phase eine möglichst lange Anlauframpe vorgesehen werden kann. Die Positionierung des Rotors entgegen der späteren Drehrichtung kann dabei wieder im Schrittbetrieb erfolgen, wobei es unerheblich ist, ob die dabei erzeugten Drehmomente größer oder kleiner als das maximale Gegendrehmoment sind. Unter der Annahme, dass die erste Stillstandsposition am Ende des Schrittbetriebes der Phase 401 im ungünstigsten Fall 4 Schritte vor dem Kompressionspunkt liegt, dann kann der Rotor um 12 Schritte entgegen der Drehrichtung gedreht werden, und kommt dann zwei Schritte hinter dem Kompressionspunkt in der zweiten Stillstandsposition zum Stehen. Es sollte beachtet werden, dass in Fig. 5 der Einfachheit halber lediglich neun Schritte dargestellt sind. Dabei ist es möglich, diesen Schrittbetrieb mit einer Schalterstellung zu beginnen, die nur zwei oder drei Schritte hinter dem Kompressionspunkt liegen. Diese Schritte entsprechen dann gegebenenfalls den elektrischen Positionen, denen der Rotor aufgrund des hohen Gegendrehmoments nicht folgen konnte. Der Rotor verharrt also bei diesen Schritten in der ersten Stillstandsposition, und wird erst bei den darauffolgenden Schritten "mitgenommen." Es ist also unerheblich, wenn die erste Stillstandsposition, in welcher der Rotor am Ende der Phase 401 zum Stehen gekommen ist, unbekannt ist, da nach Mitnahme des Rotors dessen exakte Position bekannt ist. Am Ende der Phase 402 befindet sich der Rotor somit in einer genau definierten zweiten Stillstandsposition.

In der dritten Phase 403 des Verfahrens wird der Rotor, ausgehend von der zweiten Stillstandsposition, in der ersten Drehrichtung drehend angelassen, wobei ein Drehmoment erzeugt wird, welches größer ist als das maximale Gegendrehmoment. Diese dritten Phase 403 kann wiederum in drei Abschnitte 431, 432 und 433 eingeteilt sein.

Während des ersten Abschnitts 431 werden zwei der Wicklungsstränge 130 mit einem Erregerstrom beaufschlagt, wobei der Erregerstrom einer festgelegten Anstiegsrampe folgend ansteigt. Da das Drehmoment im Wesentlichen proportional zum Strom ist, steigt auch dieses entsprechend ausgehend von Null an. Somit wird sichergestellt, dass es nicht zu Schwingungen des Rotors aufgrund eines plötzlich vorliegenden Drehmomentes kommt. Welche der zwei Wicklungsstränge angesteuert werden hängt von der Endposition des Rotors in der Phase 402 ab, wobei die Wicklungsstränge derart angesteuert werden, dass sich der Rotor im Vergleich zur Phase 402 in entgegen gesetzte Richtung, also in der endgültigen Drehrichtung bewegt.

Im zweiten Abschnitt 432 erfolgt die Ansteuerung der Wicklungsstränge gemäß einem Ansteuerprofil, welches einer vorgegebenen Startrampe entspricht. Die Parameter wie z.B. Sollstrom, Zeitpunkte der Kommutierungen und dergleichen sind dabei vorgegeben und können beispielsweise in einem Speicher der Motorsteuerung 160 abgespeichert sein. Insbesondere die Zeitpunkte der Kommutierungen richten sich hierbei also noch nicht nach der Gegen-EMK, sondern sind im vorhinein festgelegt.

Im dritten Abschnitt 433 erfolgt die Kommutierung dann in Abhängigkeit von der ermittelten Gegen-EMK, beispielsweise jeweils eine bestimmte Zeitdauer nach dem ermittelten Null-Durchgang der Gegen-EMK in der oben beschriebenen Weise. Dieser Betrieb wird auch als "Auto-Kommutierung" bezeichnet und entspricht der Darstellung in Fig. 2.

Die Anzahl der Schritte der Anlauframpe im zweiten Abschnitt 432 vor dem Umschalten in die Auto-Kommutierung sollte so gewählt werden, dass die Auto-Kommutierung bereits einige Schritte, z.B. drei bis sieben Schritte, vor dem Kompressionspunkt erreicht wird. Wenn zum Beispiel die Endposition in der zweiten Phase 402 sechzehn Schritte vor dem Kompressionspunkt liegt und das Gegendrehmoment nach dem zwölften Schritt steil ansteigt, dann ist eine Startrampe mit zehn Schritten bis zur Umschaltung in die Auto-Kommutierung ideal.

In einer Ausgestaltung steigt das von der Startrampe im zweiten Abschnitt 432 der dritten Phase 403 erzeugte Drehmoment stufenweise linear an, worunter hierbei zu verstehen ist, dass die Differenz zwischen den erzeugten Drehmomenten oder Erregerströmen von zwei aufeinanderfolgenden Schaltzuständen im Wesentlichen konstant ist. Dabei ist das erzeugte Drehmoment selbstverständlich stets größer oder gleich ist dem auf den Motor wirkende Gegendrehmoment, welches aus Trägheitskräften, Reibungskräften sowie Kompressionskräften resultiert. In einer alternativen Ausgestaltung kann jedoch das von der Startrampe erzeugte Drehmoment auch nicht-linear ansteigen. Insbesondere kann es an das erwartete Gegendrehmoment angepasst werden, so dass der Motor zunächst sanft anläuft und das erzeugte Drehmoment dann entsprechend dem steilen Anstieg des Gegendrehmoments überproportional gesteigert wird. Dies kann durch das Heranziehen der entsprechenden, ggf. gespeicherten Ansteuerparameter wie z.B. des Dutycycles erreicht werden.

Zum Ende des zweiten Abschnitts 432 wird dann auf Auto-Kommutierung umgeschaltet. Das im dritten Abschnitt 433 erzeugte Drehmoment ist größer als das Gegendrehmoment im Kompressionspunkt, so dass der Rotor diesmal nicht stehenbleibt, sondern den Kompressionspunkt überwindet und hochfährt.

Wie bereits oben erläutert hängt das Lastprofil unter anderem von der Zeit ab, für die der Kompressor nicht eingeschaltet war. Der Motor des Kompressors muss also beim Anlassen gegen unterschiedliche Lastprofile anlaufen, die nicht immer bekannt sind. Dies wird beim im Folgenden beschriebenen adaptiven Anlauf des Motors berücksichtigt.

Bei einem adaptiven Anlauf werden mehrere Anlaufversuche unterschiedlicher Art durchgeführt. Eine erste Anlaufart ist das oben beschriebene Anlassverfahren mit den beschriebenen drei Phasen. Eine zweite Anlaufart ist ein einfacher BLDC-Anlauf, wie er beispielsweise der oben beschriebenen dritten Phase 403 ohne Durchführung der Phasen 401 und 402 entspricht. Eine dritte Anlaufart ist der Neuanlauf nach einer vorbestimmten Zeitsperre, was sicherstellen soll, dass sich die Druckverhältnisse im Kolbenraum entspannen und das maximale Gegendrehmoment sinkt. Eine vierte Anlaufart ist der Anlauf mit einem geänderten Parametersatz.

Die genannten Anlaufarten können beliebig miteinander kombiniert werden. Beispielsweise ist es möglich, zunächst einen einfachen BLDC-Anlauf durchzuführen, und wenn dieser erfolglos war, das oben beschriebene Anlassverfahren mit den beschriebenen drei Phasen durchzuführen. Dass ein Anlaufversuch erfolglos war kann beispielsweise dadurch festgestellt werden, dass kein Nulldurchgang der Gegen-EMK ermittelt werden kann, also die Gegen-EMK auch nach einer vorbestimmten, relativ langen Zeit keinen Nulldurchgang aufweist.

Ein Beispiel für ein etwas umfangreicheres adaptives Verfahren ist wie folgt: In einem ersten Schritt wird eine vorgegebene Zeitsperre abgewartet. In einem zweiten Schritt erfolgt ein einfacher BLDC-Anlauf mit einem Parametersatz für drucklosen Anlauf, also einem Parametersatz, der auf einem erwarteten Lastprofil für geringen Gegendruck basiert. Schlägt dieser Anlauf fehl, wird die gesamte Anlaufsequenz mit den Phasen 401, 402 und 403 durchgeführt, und zwar wiederum mit einem Parametersatz für drucklosen Anlauf. Schlägt auch dieser Anlauf fehl, wird zunächst der BLDC-Anlauf mit geänderten Parametern und dann die gesamte Anlaufsequenz mit geänderten Parametern durchgeführt. Diese geänderten Parameter basieren auf einem erwarteten Lastprofil für hohen Gegendruck. Sind auch diese Versuche erfolglos, so kann erneut die Zeitsperre abgewartet werden, und die Sequenz von neuem durchgeführt werden, ggf. mit wieder geänderten Parametern oder einer längeren Zeitsperre.

Es ist selbstverständlich auch möglich, zunächst eine Folge von BLDC-Anläufen mit verschiedenen Parametersätzen gefolgt von einer Folge von Anlaufsequenzen mit den Phasen 401, 402 und 403 mit verschiedenen Parametersätzen durchzuführen, wobei jedem Anlaufversuch eine Zeitsperre vorausgehen kann.

Beispiele für mögliche Parameter, die bei zwischen den Anlaufsequenzen variiert werden können, sind: die Startposition des Rotors bei Beginn des BLDC-Anlaufs, die Dauer der Bestromung in der Startposition, der Dutycycle und die Änderung des Dutycycles während der Rotorausrichtungsphase, also während des Abschnitts 431, die Startrampe im Abschnitt 432, insbesondere die Zeitpunkte der einzelnen Kommutierungen während dieses Abschnitts, die Kurvenform dieser Startrampe, die Anzahl der Schritte bis zur Autokommutierung bzw. bis zur Messung der Gegen-EMK, die Anzahl der erkannten EMK-Nulldurchgänge bis zum Wechsel in die Autokommutierung, die Betriebsart und der Dutycycle in der Rampe bzw. die Änderung des Dutycycles mit der Drehzahl, die Anfangswerte am Punkt der Umschaltung für die Demagnetisierungszeit und die erste Kommutierungszeit. Weitere mögliche Parameter sind die Zeiten bis zur Aktivierung des Drehzahlreglers, bis zur etwaigen Umschaltung der Betriebsart und bis zur Verwendung drehzahlabhängiger Faktoren, sowie alle Berechnungsparameter im Betrieb zur Bestimmung des Kommutierungszeitpunktes.

Mit einem solchen adaptiven Anlauf kann der Motor auch bei unbekannten Lastverhältnissen zuverlässig angelassen werden.

**Bezugszeichenliste:**

| | |
|---|---|
| 100 | Elektromotor |
| 110 | Spannungsversorgung |
| 120 | Wechselrichterbrücke |
| 130U, 130V, 130W | Wicklungsstränge |
| 140 | Sternpunkt |
| 150 | Widerstand |
| 160 | Motorsteuerung |
| 301, 302, 303 | Lastprofile |
| 401, 402, 403 | Phasen |
| 405 | Haftschritte |
| 410, 420, 430 | Erregerströme |
| Iu, Iv, Iw | Wicklungsströme |
| Uu, Uv, | Uw Klemmenspannungen |
| T | elektrische Periode |
| Tm1, Tm2 | Messfenster |
| X1 ... X6 | Steuersignale |
| Z0, Z_cm, Z_delay, Z_trigger_vm, Z_vm, Z_max | Zählwerte |

**Patentansprüche**

1. Verfahren zum Anlassen eines Elektromotors (100), welcher einen Rotor aufweist, **gekennzeichnet durch** die folgenden Schritte:

   - Antreiben des Rotors mit einem ersten Drehmoment in einer ersten Drehrichtung, wobei ein Maximalwert des ersten Drehmoments nicht größer als ein der Drehung des Rotors entgegenwirkendes, maximales Gegendrehmoment ist, so dass der Rotor in einer ersten Stillstandsposition zum Stillstand kommt;
   - ausgehend von der ersten Stillstandsposition, Antreiben des Rotors in einer der ersten Drehrichtung entgegen gesetzten zweiten Drehrichtung, bis der Rotor in einer vorbestimmten zweiten Stillstandsposition zum Stillstand kommt; und
   - ausgehend von der zweiten Stillstandsposition, Anlassen des Rotors in der ersten Drehrichtung.

2. Verfahren nach Anspruch 1, **dadurch gekennzeichnet, dass** der Elektromotor (100) Wicklungsstränge (130) aufweist, und der Rotor angetrieben wird, indem die Wicklungsstränge (130) mit Erregerströmen (410, 420, 430) beaufschlagt werden.

3. Verfahren nach Anspruch 1 oder 2, **dadurch gekennzeichnet, dass** das der Rotor mit einem pulsweitenmoduliertes Signal, insbesondere mit einem pulsweitenmodulierten Stromsignal angetrieben wird.

4. Verfahren nach Anspruch 3, **dadurch gekennzeichnet, dass** der Dutycycle und/oder der Takt des pulsweitenmodulierten Signals derart ausgewählt ist, dass das der Maximalwert des ersten Drehmoments nicht größer ist als das maximale Gegendrehmoment.

5. Verfahren nach einem der vorhergehenden Ansprüche, **dadurch gekennzeichnet, dass** vor Erreichen der ersten und/oder der zweiten Stillstandsposition, der Elektromotor (100) im Schrittbetrieb betrieben wird.

6. Verfahren nach einem der vorhergehenden Ansprüche, **dadurch gekennzeichnet, dass** die zweite Stillstandsposition in einem Winkelbereich von 0° bis 90°, vorzugsweise 30° bis 60°, weiter vorzugsweise 35° bis 45° hinter der dem maximalen Gegendrehmoment entsprechenden Position liegt.

7. Verfahren nach einem der vorhergehenden Ansprüche, **dadurch gekennzeichnet, dass** das beim Anlassen des Motors ausgehend von der zweiten Stillstandsposition ein steigendes zweites Drehmoment erzeugt wird.

8. Verfahren nach Anspruch 7, **dadurch gekennzeichnet, dass** das zweite Drehmoment schrittweise linear ansteigt.

9. Verfahren nach Anspruch 7, **dadurch gekennzeichnet, dass** die Steigung des zweiten Drehmoments mit der Zeit zunimmt.

10. Verfahren nach einem der Ansprüche 7 bis 9, **dadurch gekennzeichnet, dass** das Drehmoment einer Startrampe folgt, an dessen Ende in den Auto-Kommutierungsbetrieb geschaltet wird, wobei zum Ende der Startrampe das Gegendrehmoment weniger als die Hälfte, vorzugsweise weniger als ein Drittel des maximalen Gegendrehmoments beträgt.

11. Verfahren nach einem der vorhergehenden Ansprüche, **dadurch gekennzeichnet, dass** der Elektromotor zunächst im Strommodus angelassen wird, und bei Erreichen einer bestimmten Drehzahl in den Spannungsmodus umgeschaltet wird.

12. Verfahren nach einem der vorhergehenden Ansprüche, **dadurch gekennzeichnet, dass** vor dem Antreiben des Rotors mit dem ersten Drehmoment der Rotor für eine bestimmte Zeitdauer in einer Ruheposition gehalten wird.

13. Verfahren nach einem der vorhergehenden Ansprüche, **dadurch gekennzeichnet, dass** der Elektromotor (100) als Antrieb für einen Kompressor, insbesondere in einem Kühlschrank, verwendet wird, wobei das maximale Gegendrehmoment dem Gegendrehmoment im Kompressionspunkt entspricht.

14. Verfahren nach einem der vorhergehenden Ansprüche, **dadurch gekennzeichnet, dass** der Elektromotor (100) durch das Anlegen von Steuersignalen (X1 - X6) angetrieben wird, wobei in einem ersten Anlaufversuch die Steuersignale (X1 - X6) anhand von Parametern für einen Zustand mit einem ersten maximalen Gegendrehmoment bestimmt werden, und in einem auf den ersten Anlaufversuch folgenden zweiten Anlaufversuch die Steuersignale (X1 - X6) anhand von Parametern für einen Zustand mit einem zweiten maximalen Gegendrehmoment bestimmt werden, wobei das zweite maximale Gegendrehmoment größer als das erste maximale Drehmoment ist.

15. Verfahren zum Anlassen eines Elektromotors (100), welcher Wicklungsstränge (130) und einen Rotor aufweist, **gekennzeichnet durch** die folgenden Schritte:

- Erzeugen eines Drehmoments, das den Rotor in einer ersten Drehrichtung bewegt, um den Elektromotor (100) anzulassen;
- falls das Anlassen des Elektromotors (100) nicht erfolgreich war, Ausführen des Verfahrens nach einem der Ansprüche 1 bis 14.

16. Vorrichtung zum Anlassen eines Elektromotors, welcher einen Rotor aufweist, ausgebildet zum Antreiben des Rotors mit einem ersten Drehmoment in einer ersten Drehrichtung, wobei ein Maximalwert des ersten Drehmoments nicht größer als ein der Drehung des Rotors entgegenwirkendes, maximales Gegendrehmoment ist, so dass der Rotor in einer ersten Stillstandsposition zum Stillstand kommt; ausgebildet zum Antreiben des Rotors ausgehend von der ersten Stillstandsposition in einer der ersten Drehrichtung entgegen gesetzten zweiten Drehrichtung, bis der Rotor in einer vorbestimmten zweiten Stillstandsposition zum Stillstand kommt; und ausgebildet zum Anlassen des Rotors ausgehend von der zweiten Stillstandsposition in der ersten Drehrichtung, wobei der Elektromotor (100) als Antrieb für einen Kompressor, insbesondere in einem Kühlschrank, ausgebildet ist, wobei das maximale Gegendrehmoment dem Ge-gendrehmoment im Kompressionspunkt entspricht.

17. Elektromotor aufweisend eine Vorrichtung nach Anspruch 16.

**Claims**

1. Method for starting up an electric motor (100), which has a rotor, **characterised by** the following steps:

- drive the rotor in a first direction of rotation with a first torque, wherein a maximum value of the first torque is not greater than a maximum countertorque which opposes the rotation of the rotor, so that the rotor comes to a standstill in a first stationary position;
- starting from the first stationary position, drive the rotor in a second direction of rotation, which is opposite from the first direction of rotation, until the rotor comes to a standstill in a predefined second stationary position; and
- starting from the second stationary position, start up the rotor in the first direction of rotation.

2. Method according to claim 1, **characterised in that** the electric motor (100) has phase windings (130) and the rotor is driven by applying excitation currents (410, 420, 430) to the phase windings (130).

3. Method according to claim 1 or 2, **characterised in that** the rotor is driven by a pulse width modulated signal, in particular by a pulse width modulated current signal.

4. Method according to claim 3, **characterised in that** the duty cycle and/or the clock cycle of the pulse width modulated signal is chosen such that the maximum value of the first torque is not greater than the maximum countertorque.

5. Method according to one of the preceding claims, **characterised in that** before reaching the first and/or the second stationary position, the electric motor (100) is driven in stepping mode.

6. Method according to one of the preceding claims, **characterised in that** the second stationary position lies within an angular range of from 0° to 90°, preferably 30° to 60°, even more preferably 35° to 45°, behind the position which corresponds to the maximum countertorque.

7. Method according to one of the preceding claims, **characterised in that** during the start-up of the motor, starting from the second stationary position, an increasing second torque is produced.

8. Method according to claim 7, **characterised in that** the second torque rises linearly in steps.

**9.** Method according to claim 7, **characterised in that** the rise in the second torque becomes steeper over time.

**10.** Method according to one of the claims 7 to 9, **characterised in that** the torque follows a start ramp, at the end of which a switchover is made into the auto-commutation mode, wherein at the end of the start ramp the countertorque is less than half, preferably less than one third, of the maximum countertorque.

**11.** Method according to one of the preceding claims, **characterised in that** the electric motor is initially started up in current mode and then, when it reaches a certain rotational speed, is switched over into the voltage mode.

**12.** Method according to one of the preceding claims, **characterised in that** before driving the rotor with the first torque, the rotor is held in a rest position for a certain period of time.

**13.** Method according to one of the preceding claims, **characterised in that** the electric motor (100) is used as the drive for a compressor, in particular in a refrigerator, wherein the maximum countertorque corresponds to the countertorque at the compression point.

**14.** Method according to one of the preceding claims, **characterised in that** the electric motor (100) is driven by the application of control signals (X1 - X6), wherein the control signals (X1 - X6) in a first run-up attempt are determined by reference to parameters for a state with a first maximum countertorque, and in a second run-up attempt which follows the first run-up attempt the control signals (X1 - X6) are determined by reference to parameters for a state with a second maximum countertorque, wherein the second maximum countertorque is greater than the first maximum torque.

**15.** Method for starting up an electric motor (100), which has phase windings (130) and a rotor, **characterised by** the following steps:

- production of a torque which moves the rotor in a first direction of rotation, in order to start up the electric motor (100);
- if the start-up of the electric motor (100) was unsuccessful, carry out the method according to one of the claims 1 to 14.

**16.** Facility for starting up an electric motor which has a rotor, designed to drive the rotor in a first direction of rotation with a first torque, wherein a maximum value of the first torque is not greater than a maximum countertorque which opposes the rotation of the rotor, so that the rotor comes to a standstill in a first stationary position; designed to drive the rotor, starting from the first stationary position, in a second direction of rotation which is opposite from the first direction of rotation, until the rotor comes to a standstill in a predefined second stationary position; and designed to start up the rotor in the first direction of rotation, starting from the second stationary position, wherein the electric motor (100) is designed as the drive for a compressor, in particular in a refrigerator, wherein the maximum countertorque corresponds to the countertorque at the compression point

**17.** Electric motor having a facility according to claim 16.

**Revendications**

**1.** Procédé de démarrage d'un moteur électrique (100) lequel présente un rotor, **caractérisé par** les étapes suivantes :

- entraînement du rotor dans un premier sens de rotation au moyen d'un premier couple, une valeur maximale du premier couple n'étant pas supérieure à un couple antagoniste maximal agissant à l'inverse de la rotation du rotor, de sorte que le rotor vienne s'immobiliser dans une première position d'immobilisation ;
- partant de la première position d'immobilisation, entraînement du rotor dans un second sens de rotation inverse au premier sens de rotation, jusqu'à ce que le rotor vienne s'immobiliser dans une seconde position d'immobilisation prédéterminée ; et
- partant de la seconde position d'immobilisation, démarrage du rotor dans le premier sens de rotation.

**2.** Procédé selon la revendication 1, **caractérisé en ce que** le moteur électrique (100) présente des faisceaux d'enroulement (130) et **en ce que** le rotor est entraîné du fait que les faisceaux d'enroulement (130) sont alimentés en courants d'excitation (410, 420, 430).

**3.** Procédé selon la revendication 1 ou 2, **caractérisé en ce que** le rotor est entraîné au moyen d'un signal à impulsions modulées en largeur, notamment au moyen d'un signal de courant à impulsions modulées en largeur.

**4.** Procédé selon la revendication 3, **caractérisé en ce que** le cycle de fonctionnement et/ou la cadence du signal à impulsions modulées en largeur sont sélectionnés de manière à ce que la valeur maximale du premier couple ne soit pas supérieure au couple antagoniste maximal.

**5.** Procédé selon l'une quelconque des revendications précédentes, **caractérisé en ce que** le moteur électrique (100), avant d'atteindre la première et/ou la seconde position d'immobilisation, fonctionne en régime pas à pas.

**6.** Procédé selon l'une quelconque des revendications précédentes, **caractérisé en ce que** la seconde position d'immobilisation est située dans une plage angulaire de 0° à 90°, de préférence de 30° à 60°, de préférence encore de 35° à 45° derrière la position correspondant au couple antagoniste maximal.

**7.** Procédé selon l'une quelconque des revendications précédentes, **caractérisé en ce que** lors du démarrage du moteur, en partant de la seconde position d'immobilisation, un second couple ascendant est généré.

**8.** Procédé selon la revendication 7, **caractérisé en ce que** le second couple augmente linéairement pas à pas.

**9.** Procédé selon la revendication 7, **caractérisé en ce que** l'élévation du second couple augmente avec le temps.

**10.** Procédé selon l'une quelconque des revendications 7 à 9, **caractérisé en ce que** le couple suit une rampe de démarrage à la fin de laquelle une commutation en régime d'auto-commutation a lieu, le couple antagoniste, à la fin de la rampe de démarrage, étant moins de la moitié, de préférence moins d'un tiers du couple antagoniste maximal.

**11.** Procédé selon l'une quelconque des revendications précédentes, **caractérisé en ce que** le moteur électrique est d'abord démarré en mode courant et est commuté en mode tension lorsqu'une vitesse de rotation déterminée est atteinte.

**12.** Procédé selon l'une quelconque des revendications précédentes, **caractérisé en ce qu'**avant l'entraînement du rotor au moyen du premier couple, le rotor est maintenu dans une position de repos pour une durée déterminée.

**13.** Procédé selon l'une quelconque des revendications précédentes, **caractérisé en ce que** le moteur électrique (100) est utilisé en tant qu'entraînement pour un compresseur, notamment dans un réfrigérateur, le couple antagoniste maximal correspondant au couple antagoniste au point de compression.

**14.** Procédé selon l'une quelconque des revendications précédentes, **caractérisé en ce que** le moteur électrique (100) est entraîné par l'application de signaux de commande (X1 - X6), les signaux de commande (X1 -X6), dans une première tentative de démarrage, étant déterminés pour un état avec un premier couple antagoniste maximal à l'aide de paramètres, et les signaux de commande (X1 - X6), dans une seconde tentative de démarrage succédant à la première tentative de démarrage, étant déterminés pour un état avec un couple antagoniste maximal à l'aide de paramètres, le second couple antagoniste maximal étant supérieur au premier couple maximal.

**15.** Procédé de démarrage d'un moteur électrique (100) lequel présente des faisceaux d'enroulement (130) et un rotor, **caractérisé par** les étapes suivantes :

- génération d'un couple qui déplace le rotor dans un premier sens de rotation afin de démarrer le moteur électrique (100) ;
- au cas où le démarrage du moteur électrique (100) n'ait pas réussi, réalisation du procédé selon l'une quelconque des revendications 1 à 14.

**16.** Dispositif destiné au démarrage d'un moteur électrique lequel présente un rotor, réalisé pour entraîner le rotor dans un premier sens de rotation au moyen d'un premier couple, une valeur maximale du premier couple n'étant pas supérieure à un couple antagoniste maximal agissant à l'inverse de la rotation du rotor, de sorte que le rotor vienne s'immobiliser dans une première position d'immobilisation ; réalisé pour entraîner le rotor, en partant de la première position d'immobilisation, dans un second sens de rotation inverse au premier sens de rotation, jusqu'à ce que le rotor vienne s'immobiliser dans une seconde position d'immobilisation prédéterminée ; et réalisé pour démarrer le rotor dans le premier sens de rotation, en partant de la seconde position d'immobilisation, le moteur électrique (100) étant réalisé en tant qu'entraînement pour un compresseur, notamment dans un réfrigérateur, le couple antagoniste maximal correspondant au couple antagoniste au point de compression.

17. Moteur électrique présentant un dispositif selon la revendication 16.

# Fig. 1

# Fig. 2

# Fig. 3

# Fig. 4

# Fig. 5

EP 2 583 380 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69803885 T2
- DE 4009258 C2
- DE 60025909 T2
- DE 10215428 A1
- US 4565957 A